# EUROPÄISCHE PATENTSCHRIFT

(11) **EP 0 398 862 B1**
(45) Veröffentlichungstag und Bekanntmachung des Hinweises auf die Patenterteilung: **27.07.1994**
(21) Anmeldenummer: 90890136.6
(22) Anmeldetag: 08.05.1990
(51) Int. Cl.: G05D 16/20

(54) **Signalwandler**
Signal converter
Convertisseur de signaux

(30) Priorität: 19.05.1989 AT 1212/89
(43) Veröffentlichungstag der Anmeldung: 22.11.1990
(73) Patentinhaber: HOERBIGER VENTILWERKE AKTIENGESELLSCHAFT, 1110 Wien (AT)
(72) Erfinder: Frisch, Herbert, A-1238 Wien (AT)
(74) Vertreter: Klein, Adam, Dipl.Ing.

(56) Entgegenhaltungen:
- EP-A- 0 191 011
- WO-A-80/01826
- DE-A- 3 400 645
- US-A- 4 567 394

## Beschreibung

Die Erfindung bezieht sich auf einen Signalwandler zum Steuern einer pneumatischen oder hydraulischen Druckmittelströmung durch ein elektrisches Steuersignal, mit einem Gehäuse, in dem wenigstens ein piezoelektrisches Steuerelement, das auf ein elektrisches Signal anspricht, und wenigstens ein vom Steuerelement betätigtes Ventil für das Druckmittel angeordnet sind und das mit wenigstens zwei Anschlußkanälen für die Zuführung und die Abführung des Druckmittels versehen ist.

Signalwandler dieser Bauart sind bekannt, z.B. aus der WO-A 80/01826 und aus der DE-A1-3400645. Sie ersetzen in pneumatischen und hydraulischen Schaltkreisen die bisher verwendeten Magnetventile, die verhältnismäßig groß, schwer und teuer sind. Magnetventile arbeiten außerdem träge und weisen einen hohen Energiebedarf auf, wobei durch die dabei erzeugte Wärme weitere Schwierigkeiten in modernen elektronischen Steuerungsanordnungen auftreten können. Die durch piezoelektrische Steuerelemente betätigten pneumatischen oder hydraulischen Signalwandler vermeiden diese Nachteile. Sie können aber nur einen kleinen Stellweg ausführen, bei nur geringen Stellkräften und Dichtungskräften. Um diese Signalwandler trotzdem anwenden zu können, müssen aufwendige Zusatzgeräte, wie z.B. Druckregler und Verstärker, vorgesehen werden.

Der Erfindung liegt die Aufgabe zugrunde, die bisher bekannten Signalwandler mit piezoelektrischen Steuerelementen und die durch diese betätigten Ventile so zu vereinfachen und zu verbessern, daß mit wenig elektrischer Energie ein ausreichend großer Ventilquerschnitt gesteuert werden kann, ohne daß die Funktion des Signalwandlers durch wechselnde und auch höhere Drücke nachteilig beeinflußt wird.

Mit der Erfindung wird diese Aufgabe dadurch gelöst, daß jedes Steuerelement aus einem mit Elektroden versehenen Hohlkörper aus piezoelektrischem Material besteht, der an einem Ende im Gehäuse verankert ist und am anderen, freien Ende eine Öffnung aufweist, die von einer Abschlußwand überdeckt ist, und daß der Innenraum des Hohlkörpers mit einem Anschlußkanal und der Gehäuseraum außerhalb des Hohlkörpers mit einem anderen Anschlußkanal in Verbindung steht. Ein aus piezoelektrisch aktivem Material, z.B. aus Piezokeramik, bestehender Körper ändert bekanntlich seine Form, wenn ihm über Elektroden ein elektrisches Spannungssignal zugeführt wird. Ein Hohlkörper aus solchem Material, z.B. ein Rohr, wird verlängert oder verkürzt, in Abhängigkeit davon, ob das elektrische Signal positiv oder negativ ist. Die Erfindung macht von diesem Effekt Gebrauch.

In der einen Endlage liegt das Steuerelement mit seinem freien Ende an der Abschlußwand an, die dabei die Öffnung des Hohlkörpers abschließt. Die Verbindung zwischen den beiden Anschlußkanälen, die mit dem Innenraum des Hohlkörpers und mit dem Gehäuseraum außerhalb desselben verbunden sind, ist dabei unterbrochen. Durch Zuführen eines elektrischen Steuersignals kann erreicht werden, daß sich der Hohlkörper verkürzt, wobei sich sein freies Ende von der Abschlußwand löst und zwischen dieser und der Öffnung des Hohlkörpers ein ring- oder rahmenförmiger Spalt freigegeben wird. Über diesen Spalt sind dann die beiden Anschlußkanäle miteinander verbunden.

Der erfindungsgemäße Signalwandler braucht also zu seiner Betätigung nur ein elektrisches Steuersignal mit geringer Energie. Die Schaltbewegungen des Hohlkörpers sind weitgehend vom Druck des gesteuerten Mediums unabhängig, so daß auch höhere pneumatische oder hydraulische Drücke geschaltet werden können, ohne daß Druckregler und Verstärker notwendig sind. Da der Umfang der Öffnung des Hohlkörpers verhältnismäßig groß sein kann, ist auch bei kleinem Schaltweg und enger Spaltbreite insgesamt eine verhältnismäßig große Querschnittsfläche zwischen dem Steuerelement und der Abschlußwand für den Durchtritt des Mediums erzielbar.

Bei einer bevorzugten Ausführung der Erfindung ist jeder Hohlkörper ein zylindrisches Rohr mit Kreisquerschnitt. Diese Bauart ist besonders einfach. Mit einem einzigen zylindrischen Rohr und einem dieses einschließenden Gehäuse kann ein Zweiwegeventil verwirklicht werden.

Die Elektroden für die Zuführung des elektrischen Steuersignals zum Steuerelement sind zweckmäßig auf dem Außenmantel und auf dem Innenmantel des Hohlkörpers angeordnet. Sie können beispielsweise auf die Wände des Hohlkörpers aufgedampft, aufgespritzt oder auch aufgeklebt sein, wobei Kontaktstellen für den Anschluß der Steuerleitungen, zweckmäßig in der Nähe des am Gehäuse befestigten, abgeschlossenen Endes des Hohlkörpers, vorgesehen sind. Es ist aber auch möglich, Elektroden in das Material des Hohlkörpers einzubetten, wobei mehrere gleichpolige Elektroden miteinander verbunden sein können.

Die Abschlußwand kann von einer Platte gebildet sein, die im Gehäuse in Achsrichtung des Hohlkörpers verschiebbar ist, wobei ein Anschlag für die Platte vorgesehen ist, an dem die Platte in ihrer dem Hohlkörper zugewendeten Endlage anliegt. Dabei ist außerdem der Anschlag als Ventilsitz ausgebildet und der durch diesen Ventilsitz vom Hohlkörper getrennte Gehäuseraum mit einem weiteren Anschlußkanal verbunden. Auf diese Weise kann ein 3/2-Wegeventil einfach verwirklicht werden. Wenn sich der Hohlkörper verlängert, hebt er die Platte vom Anschlag und damit vom Ventilsitz ab, wobei die in die Gehäuseräume außerhalb des Hohlkörpers mündenden Anschlußkanäle miteinander verbunden werden. Wenn dagegen ein elektrisches Steuersignal zugeführt wird, das ein Verkürzen des Hohlkörpers bewirkt, bleibt die Platte auf dem Anschlag liegen, wobei zwischen ihr und dem Hohlkörper ein Ringspalt freigegeben wird.

Um sicherzustellen, daß die Platte unabhängig von den jeweils herrschenden Mediumsdrücken immer auf den Anschlag gepreßt wird, kann sie durch eine Feder in Richtung auf den Anschlag belastet sein.

Die Platte kann im Gehäuse abgedichtet geführt sein. Sie kann dann durch den Druck eines Mediums auf den Anschlag gepreßt werden. Die Abdichtung der Platte hat aber in erster Linie den Zweck, einen Druckausgleich zwischen den beiden Seiten der Platte zu ermöglichen, so daß auch höhere Drücke ohne Schwierigkeiten geschaltet werden können. Zu diesem Zweck ist die Platte mit einem oder mehreren Druckausgleichskanälen versehen, die von einer Plattenseite zur anderen Plattenseite geführt sind. Bei dieser Anordnung kann die Platte außerdem mit einem sie durchsetzenden Verbindungskanal versehen sein, der den Innenraum des Hohlkörpers mit einem Anschlußkanal verbindet.

In weiterer Ausgestaltung der Erfindung können wenigstens zwei Hohlkörper unter Bildung eines zwischen ihnen liegenden Zwischenraumes konzentrisch ineinander angeordnet sein, die am gleichen Ende am Gehäuse verankert und am anderen Ende von derselben Abschlußwand überdeckt sind. Diese gleichfalls äußerst einfache Anordnung ergibt ein Mehrwegeventil mit vorteilhaften Eigenschaften. Jeder Hohlkörper kann mit Elektroden versehen und so mit einem Steuersignal beaufschlagt werden. Dadurch ist es möglich, die Durchtrittsspalte zwischen den freien Enden der Hohlkörper und der gemeinsamen Abschlußwand beliebig zu steuern. Auch dabei kann als Abschlußwand eine Platte verwendet werden, wobei jeweils ein Hohlkörper den mit der Platte zusammenwirkenden Anschlag für den anderen Hohlkörper bildet. Jeder Zwischenraum zwischen zwei benachbarten konzentrischen Hohlkörpern kann mit einem eigenen Anschlußkanal in Verbindung stehen. Wenn alle Hohlkörper gleich lang sind und aus Werkstoff mit dem gleichen Wärmedehnungskoeffizienten bestehen, ist der Signalwandler auch temperaturkompensiert.

Die Hohlkörper oder als solche dienende zylindrische Rohre können aus homogenem Material, z.B. aus Piezokeramik bestehen. Im Rahmen der Erfindung kann eine weitere Verbesserung dadurch erreicht werden, daß der Hohlkörper eine Wandung aus wenigstens zwei Materiallagen hat, zwischen denen Elektroden angeordnet sind. Auf diese Weise ist es möglich, die Gesamtfläche der Elektroden zu vergrößern. Das erzielbare Ausmaß der Verlängerung der Hohlkörper hängt außer von der angelegten Spannung, der Formgebung und den Materialeigenschaften des Hohlkörpers in erheblichem Ausmaß auch von der Größe der Elektrodenflächen sowie vom Abstand der Elektroden voneinander und damit von der Dicke des piezoelektrischen Materials zwischen den gegenpoligen Elektroden ab.

Eine Ausführungsform, bei der die vorteilhaften Eigenschaften optimiert sind, kann im Rahmen der Erfindung dadurch erreicht werden, daß der Hohlkörper aus einem spiralenförmig gewickelten Band besteht, auf dessen beide Außenseiten die Elektroden aufgebracht sind. Das Band besteht vorteilhaft aus zwei Lagen aus piezoelektrischem Werkstoff, zwischen denen eine Innenelektrode und an deren Außenseiten je eine Außenelektrode angeordnet ist. Der so gebildete Hohlkörper weist trotz großer Elektrodenflächen und einem kleinen Abstand zwischen den gegenpoligen Elektroden eine ausreichende mechanische Festigkeit auf.

Um die Dichtheit des Ventils zu verbessern, kann nach einem weiteren Merkmal der Erfindung auf das freie Ende des Hohlkörpers ein die Öffnung umgebender Sitzkörper dicht aufgesetzt sein, der mit der Abschlußwand zusammenwirkt. Damit die Dichtfläche genau definiert ist und Undichtheiten durch Ablagerungen und andere Verunreinigungen auf der Sitzfläche verhindert werden, kann der Sitzkörper auf seiner mit der Abschlußwand zusammenwirkenden Seite mit einer scharfkantigen Schneide versehen sein.

Es ist im Rahmen der Erfindung durchaus möglich, die Hohlkörper einstückig auszubilden, z.B. als zylindrische Rohre bestimmter Länge. Es kann aber auch vorteilhaft sein, den Hohlkörper aus einzelnen Abschnitten zusammenzusetzen, die in Längsrichtung aneinander anschließen. Dies kann fertigungstechnische Vorteile mit sich bringen, die Festigkeitseigenschaften erhöhen, aber auch einen größeren Schaltweg und damit einen größeren Durchgangsquerschnitt durch das Ventil ermöglichen. Auch ist es möglich, den Hohlkörper tonnenförmig, gegen seine Enden konisch verjüngt auszuführen oder mit einem polygonalen Querschnitt herzustellen. Für verschiedene Anwendungsfälle können sich die unterschiedlichen Formgebungen sowie Kombinationen zwischen diesen als jeweils zweckmäßig erweisen.

In den Zeichnungen sind Ausführungsbeispiele der Erfindung schematisch dargestellt. Die Fig. 1 bis 7 zeigen axiale Mittelschnitte durch erfindungsgemäße Signalwandler, Fig. 8 ist ein Axialschnitt und Fig. 9 ein Querschnitt durch ein piezoelektrisches Steuerelement, Fig. 10 zeigt einen Längsschnitt durch ein weiteres Ausführungsbeispiel des Signalwandlers und die Fig. 11, 12 und 13 sind Querschnitte durch verschiedene Ausführungsformen.

In allen Ausführungsbeispielen besteht der dargestellte Signalwandler aus einem Gehäuse 1, das mit Anschlußkanälen 2,2′,2˝ für die Zuführung und die Abführung des Druckmittels versehen ist. Im Inneren des Gehäuses 1 ist jeweils wenigstens ein Hohlkörper 3,3′ aus piezoelektrischem Material als Steuerelement angeordnet. Der Hohlkörper 3,3′ ist mit einem Ende im Gehäuse 1 verankert, z.B. durch Kleben, und an seinem anderen, freien Ende mit einer Öffnung 4 versehen. Dieser liegt eine Abschlußwand 5 gegenüber, die die Öffnung 4 überdeckt und das freie Ende des Hohlkörpers 3,3′ dicht abschließen kann. Der Innenraum 6 des Hohlkörpers 3,3′ steht mit einem Anschlußkanal 2′ und der Gehäuseraum 7 außerhalb des Hohlkörpers 3,3′ steht mit einem anderen Anschlußkanal 2,2˝ in Verbindung. Am Ende des Hohlkörpers 3,3′, das im Gehäuse 1 verankert ist, sind Kontakte 8 und 9 vorgesehen, von denen Anschlußleitungen 10 und 11 für die Zuführung der elektrischen Steuersignale herausgeführt sind.

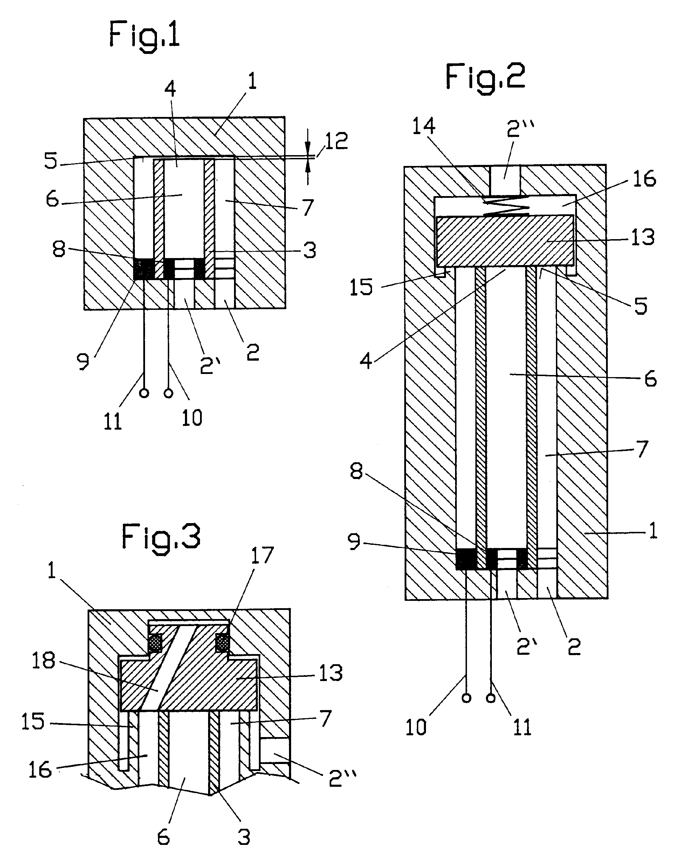

Im Ausführungsbeispiel nach Fig. 1 ist ein einziger Hohlkörper 3 vorgesehen, der als zylindrisches Rohr ausgebildet ist. Die Abschlußwand 5 ist eine Wand des Gehäuses 1. Der Hohlkörper 3 ist sowohl an seiner Innenfläche als auch an seiner Außenfläche mit nicht dargestellten Elektroden versehen, die mit den Kontakten 8 und 9 in Verbindung stehen. Wenn an die Anschlußleitungen 10 und 11 ein elektrisches Spannungssignal angelegt wird, erfolgt über die Kontakte 8 und 9 und die daran angeschlossenen Elektroden eine Aktivierung des piezoelektrischen Materials des Hohlkörpers 3, wodurch sich der Hohlkörper 3 entweder in Richtung seiner Achse verlängert oder verkürzt, je nach dem, ob das angelegte Steuersignal positiv oder negativ ist.

In Fig. 1 befindet sich der als zylindrisches Rohr ausgebildete Hohlkörper 3 in seiner verkürzten Lage. Zwischen dem freien Ende des Hohlkörpers 3 mit der Öffnung 4 und der Abschlußwand 5 ist dadurch ein Spalt 12 gebildet, über den der Innenraum 6 des Hohlkörpers 3 mit dem Gehäuseraum 7 außerhalb des Hohlkörpers 3 verbunden ist. Dadurch besteht eine Verbindung zwischen den im Gehäuse 1 vorgesehenen Anschlußkanälen 2 und 2′. Das Ventil des Signalwandlers ist in dieser Lage offen. Wenn das über die Anschlußleitungen 10 und 11 zugeführte elektrische Signal abgeschaltet oder umgepolt wird, verlängert sich der Hohlkörper 3, wodurch sein freies Ende an die Abschlußwand 5 dicht angepreßt und die Öffnung 4 verschlossen wird. Dadurch wird auch die Verbindung zwischen den Anschlußkanälen 2 und 2′ unterbrochen.

Aus der Zeichnung ist zu erkennen, daß die Schaltbewegungen des Hohlkörpers 3 vom Druck des gesteuerten Mediums nicht beeinflußt werden, so daß praktisch Druckmedien mit beliebig hohen Drücken geschaltet werden können. Der Signalwandler ist weitgehend druckunabhängig. Ein Druckgefälle von außerhalb des Hohlkörpers 3 zu dessen Innenraum 6 ist in der Regel von Vorteil, der Signalwandler funktioniert aber in gleicher Weise auch bei umgekehrtem Anschluß.

Die übrigen Ausführungsbeispiele funktionieren prinzipiell in gleicher Weise, wie das beschriebene Ausführungsbeispiel nach Fig. 1. Sie unterscheiden sich davon nur durch funktionelle und konstruktive weitere Ausgestaltungen. So ist im Ausführungsbeispiel nach Fig. 2 die Abschlußwand 5 von einer Platte 13 gebildet, die im Gehäuse 1 mit Spiel in Achsrichtung des Hohlkörpers 3 verschiebbar ist. Die Platte 13 ist durch eine Feder 14 belastet, die sie an einen ringförmigen Anschlag 15 anpreßt, der an der Wandung des Gehäuses 1 vorgesehen ist. Dieser Anschlag ist als Ventilsitz ausgebildet, wodurch die Platte 13 den Gehäuseraum 7 an der Außenseite des Hohlkörpers 3 von einem weiteren Hohlraum 16 des Gehäuses 1 trennt, von dem ein weiterer Anschlußkanal 2˝ nach außen geführt ist.

Bei diesem Ausführungsbeispiel sind in der dargestellten Lage der Innenraum 6 des Hohlkörpers 3, der Gehäuseraum 7 und der Hohlraum 16 durch die Platte 13 voneinander getrennt, so daß keine Verbindung zwischen den Anschlußkanälen 2,2′ und 2˝ besteht. Sobald an die Kontakte 8 und 9 über die Anschlußleitungen 10 und 11 ein elektrisches Signal angelegt wird, das eine Verlängerung des Hohlkörpers 3 bewirkt, hebt dieser die Platte 13 von dem als Ventilsitz ausgebildeten Anschlag 15 ab. Dadurch wird der Anschlußkanal 2 mit dem Anschlußkanal 2˝ verbunden. Bewirkt dagegen das angelegte Steuersignal eine Verkürzung des Hohlkörpers 3, dann wird die Öffnung 4 am oberen Ende des Hohlkörpers 3 freigegeben und der Innenraum 6 des Hohlkörpers 3 über einen dem Spalt 12 in Fig. 1 entsprechenden Spalt mit dem Gehäuseraum 7 verbunden. Durch ein passendes elektrisches Steuersignal kann also der Anschlußkanals 2 wahlweise entweder mit dem Anschlußkanal 2′ oder mit dem Anschlußkanal 2˝ verbunden werden.

In der Ausführung nach Fig. 3 ist die Platte 13 als Kolben ausgebildet und im Gehäuse 1 durch einen O-Ring 17 abgedichtet geführt. Außerdem durchsetzt ein Ausgleichskanal 18 die Platte 13. Der vom Hohlraum 16 nach außen geführte Anschlußkanal 2˝ mündet seitlich. Mit Hilfe des Ausgleichskanals 18 kann die Größe der jeweiligen Anpreßkraft der Platte 13 an den Anschlag 15 und das Ausmaß der erzielten Druckentlastung der Platte 13 durch Wahl der Größe der jeweils druckbeaufschlagten Flächen nach Bedarf bestimmt werden. Es ist auch möglich, den Ausgleichskanal 18 vom Innenraum 6 des Hohlkörpers 3 ausgehen zu lassen.

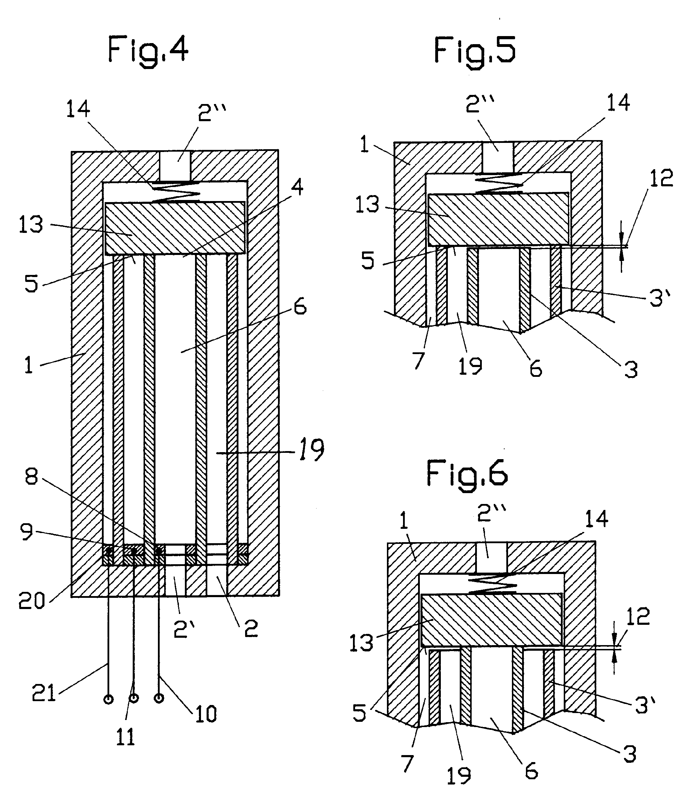

Die Fig. 4, 5 und 6 zeigen ein Ausführungsbeispiel des Signalwandlers in der Ausführung als Mehrwegeventil. Im Inneren des Gehäuses 1 sind zwei Hohlkörper 3 und 3′, die als zylindrische Rohre ausgebildet sind, konzentrisch ineinander angeordnet, wobei zwischen ihnen ein Zwischenraum 19 gebildet ist. Der Zwischenraum 19 steht mit einem Anschlußkanal 2 in Verbindung und ist am oberen Ende durch die Abschlußwand 5 der Platte 13 abgeschlossen. Die Abschlußwand 5 liegt auf den Stirnseiten beider Hohlkörper 3,3′ auf, die entsprechend bearbeitet sind, z.B. durch Läppen, so daß ein dichter Abschluß erzielt wird. Die Platte 13 ist im Gehäuse 1 mit Spiel verschiebbar geführt und wird durch die Feder 14 auf die offenen Enden der beiden Hohlkörper 3,3′ aufgepreßt. Ein eigener Anschlag im Gehäuse 1 ist bei dieser Ausführung nicht erforderlich, weil jeweils der eine der beiden Hohlkörper 3,3′ den Anschlag für den anderen Hohlkörper bildet, wie später noch erläutert wird.

Auch der äußere Hohlkörper 3′ ist mit Elektroden versehen, die mit Kontakten in Verbindung stehen. Die innere Elektrode steht mit dem äußeren Kontakt 9 des Hohlkörpers 3 in Verbindung und an der Außenseite des Hohlkörpers 3′ ist ein weiterer Kontakt 20 vorgesehen, von dem eine Anschlußleitung 21 nach außen geführt ist.

Wenn an die Anschlußleitungen 10 und 11 ein elektrisches Steuersignal angelegt wird, das eine Verkürzung des Hohlkörpers 3 bewirkt, dann löst sich dieser von der Abschlußwand 5, so daß zwischen dieser und dem freien Ende des Hohlkörpers 3 ein Spalt 12 entsteht, wie in Fig. 5 dargestellt ist. Der Innenraum 6 des Hohlkörpers 3 ist dabei mit dem Zwischenraum 19 verbunden, so daß eine Verbindung zwischen den Anschlußkanälen 2 und 2′ entsteht, wie aus Fig. 4 entnommen werden kann. Der gleiche Effekt wird erreicht, wenn an die Anschlußleitungen 11 und 21 ein elektrisches Steuersignal angelegt wird, das eine Verlängerung des außen liegenden Hohlkörpers 3′ bewirkt.

Die in Fig. 6 dargestellte Lage wird erreicht, wenn an den innen liegenden Hohlkörper 3 über die Anschlußleitungen 10 und 11 ein elektrisches Signal angelegt wird, das eine Verlängerung des Hohlkörpers 3 bewirkt, oder wenn über die Anschlußleitungen 11 und 21 dem äußeren Hohlkörper 3′ ein Signal zugeführt wird, das dessen Verkürzung bewirkt. Wie Fig. 6 zeigt, liegt in diesem Fall der Spalt 12 zwischen dem oberen Ende des Hohlkörpers 3′ und der Abschlußwand 5 der Platte 13, so daß der Zwischenraum 19 mit dem Gehäuseraum 7 verbunden ist, wogegen der Innenraum 6 des inneren Hohlkörpers 3 abgeschlossen ist. Mit dieser Ausführungsform des Signalwandlers kann also die Funktion eines 3/2-Wegeventils erzielt werden. Um andere Mehrwegeventilfunktionen zu erzielen, können auch mehr als zwei Hohlkörper 3,3′ konzentrisch ineinander angeordnet und über eigene Anschlußleitungen gesteuert werden.

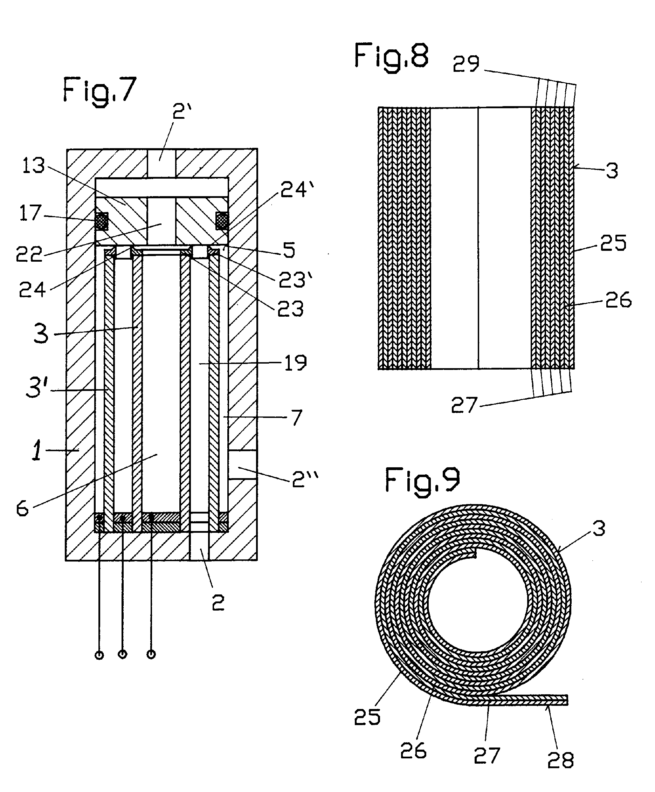

Im Ausführungsbeispiel nach Fig. 7 sind gleichfalls zwei konzentrisch ineinander angeordnete Hohlkörper 3 und 3′ als piezoelektrische Steuerelemente vorgesehen, die durch eine im Gehäuse 1 verschiebbare Platte 13 mit einer Abschlußwand 5 abgeschlossen werden. Die Platte 13 ist im Gehäuse 1 verschiebbar geführt und durch einen O-Ring 17 abgedichtet. Außerdem ist die Platte 13 von einem Verbindungskanal 22 durchsetzt, der vom Anschlußkanal 2′ zum Innenraum 6 des innenliegenden Hohlkörpers 3 führt. Bei dieser Ausführung wird die Platte 13 durch das gesteuerte Medium gegen die Hohlkörper 3,3′ gepreßt, so daß die in Fig. 4 mit 14 bezeichnete Feder nicht erforderlich ist. Die Wirkungsweise des Signalwandlers stimmt mit der zu den Fig. 4, 5 und 6 beschriebenen Wirkungsweise überein. Auch dort werden die einzelnen Räume 6,7 und 19 über den Spalt 12 wahlweise miteinander verbunden.

Aus Fig. 7 ist ferner zu erkennen, daß auf die freien Enden der als zylindrische Rohre ausgebildeten Hohlkörper 3 und 3′ je ein ringförmiger Sitzkörper 23 und 23′ aufgesetzt ist. Dieser Sitzkörper besteht zweckmäßig aus verschleißfestem Material, z.B. aus Metall, und hat die Aufgabe, den freien Rand des aus piezoelektrischem Material bestehenden Hohlkörpers 3,3′ zu schützen. An der mit der Abschlußwand 5 zusammenwirkenden Seite sind die Sitzkörper 23,23′ mit einer scharfkantigen Schneide 24,24′ versehen, wodurch eine bessere Abdichtung erzielt wird, weil die Schneiden eine gewisse Selbstreinigung bewirken und störende Ablagerungen verhindern.

Die Fig. 8 und 9 zeigen einen beispielsweisen Aufbau eines als piezoelektrisches Steuerelement verwendeten Hohlkörpers 3, in Fig. 8 im Längsschnitt und in Fig. 9 im Querschnitt. Der Hohlkörper 3 ist als zylindrisches Rohr ausgeführt, mit einer Wandung, die aus wenigstens zwei Materiallagen 25 und 26 zusammengesetzt ist, zwischen denen sich jeweils eine Innenelektrode 27 befindet. Die beiden Materiallagen 25, 26 und die Innenelektrode 27 bilden ein Band 28, das spiralförmig zu dem Hohlkörper 3 gewickelt ist, wie Fig. 9 zeigt. Auf die Außenseiten des Bandes sind Außenelektroden 29 aufgebracht (Fig. 8). Durch diese Ausbildung werden verhältnismäßig große Elektrodenflächen bei kleinem Abstand zwischen den Elektroden erreicht, wodurch mit Steuersignalen niedriger Spannung größere Längenänderungen der Hohlkörper erreicht werden, als bei Verwendung verhältnismäßig dicker Hohlkörper, die lediglich auf der Außenseite und auf der Innenseite mit Elektroden versehen sind.

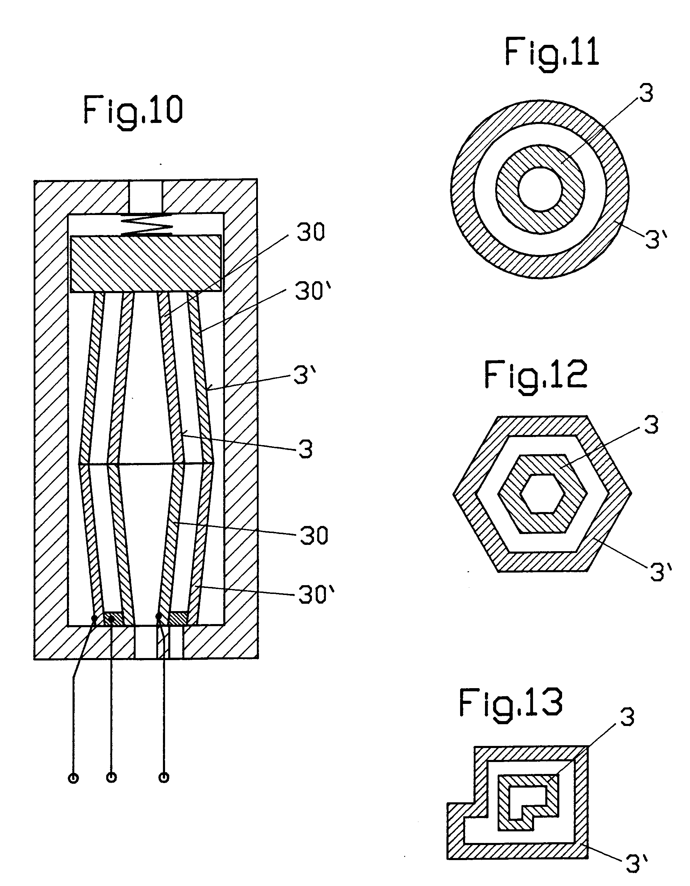

Beim Ausführungsbeispiel nach Fig. 10 sind die beiden Hohlkörper 3 und 3′ aus Abschnitten 30 und 30′ zusammengesetzt, die in Längsrichtung aneinander anschließen. Dadurch wird die Herstellung längerer Hohlkörper erleichtert. Außerdem sind die beiden Hohlkörper 3,3′ in diesem Ausführungsbeispiel im mittleren Bereich mit größerem Durchmesser ausgeführt, also etwa tonnenförmig ausgebildet, wobei ihre Enden verjüngt sind. Dies kann für bestimmte Anwendungsfälle von Vorteil sein. Die einzelnen Abschnitte 30 und 30′ sind dabei von Kegelstümpfen gebildet. Es sind aber auch gekrümmt verlaufende sowie unregelmäßige Außenkonturen und Querschnitte möglich.

Die Fig. 11, 12 und 13 zeigen verschiedene Querschnitte der beiden konzentrisch ineinander angeordneten Hohlkörper 3 und 3′. In der Ausführung nach Fig. 11 sind die beiden Hohlkörper 3,3′ mit kreisringförmigem Querschnitt ausgeführt, also entweder zylindrisch oder kegelförmig ausgebildet. Fig. 12 zeigt dagegen Hohlkörper 3,3′ mit sechseckigem Querschnitt, während in Fig. 13 Hohlkörper 3,3′ mit einem unregelmäßigen polygonalen Querschnitt dargestellt sind. Die genaue Querschnittsform ist für die Durchführung der Erfindung nicht von grundsätzlicher Bedeutung. Es kommt lediglich darauf an, daß die verwendeten Hohlkörper bei Anlegung eines passenden Spannungssignals über die auf sie aufgebrachten Elektroden ihre Länge ändern. Die Querschnittsform kann dann unter Berücksichtigung der jeweiligen Anwendungsbedingungen und der Herstellungsmöglichkeiten gewählt werden.

## Patentansprüche

1. Signalwandler zum Steuern einer pneumatischen oder hydraulischen Druckmittelströmung durch ein elektrisches Steuersignal, mit einem Gehäuse (1), in dem wenigstens ein piezoelektrisches Steuerelement, das auf ein elektrisches Signal anspricht, und wenigstens ein vom Steuerelement betätigtes Ventil für das Druckmittel angeordnet sind und das mit wenigstens zwei Anschlußkanälen (2,2′,2˝) für die Zuführung und die Abführung des Druckmittels versehen ist, dadurch gekennzeichnet, daß jedes Steuerelement aus einem mit Elektroden versehenen Hohlkörper (3,3′) aus piezoelektrischem Material besteht, der an einem Ende im Gehäuse (1) verankert ist und am anderen, freien Ende eine Öffnung (4) aufweist, die von einer Abschlußwand (5) überdeckt ist, und daß der Innenraum (6) des Hohlkörpers (3) mit einem Anschlußkanal (2′) und der Gehäuseraum (7) außerhalb des Hohlkörpers (3) mit einem anderen Anschlußkanal (2) in Verbindung steht.

2. Signalwandler nach Anspruch 1, dadurch gekennzeichnet, daß jeder Hohlkörper (3,3′) ein zylindrisches Rohr mit Kreisquerschnitt ist.

3. Signalwandler nach Anspruch 1 oder 2, dadurch gekennzeichnet, daß die Elektroden auf dem Außenmantel und auf dem Innenmantel des Hohlkörpers (3,3′) vorgesehen sind.

4. Signalwandler nach Anspruch 1, 2 oder 3 , dadurch gekennzeichnet, daß die Abschlußwand (5) von einer Platte (13) gebildet ist, die im Gehäuse (1) in Achsrichtung des Hohlkörpers (3,3′) verschiebbar ist, und daß ein Anschlag (15) für die Platte (13) vorgesehen ist, an dem die Platte (13) in ihrer dem Hohlkörper (3,3′) zugewendeten Endlage anliegt, wobei der Anschlag (15) als Ventilsitz ausgebildet und der durch diesen Ventilsitz vom Hohlkörper (3,3′) getrennte Hohlraum (16) mit einem weiteren Anschlußkanal (2˝) verbunden ist.

5. Signalwandler nach Anspruch 4, dadurch gekennzeichnet, daß die Platte (13) durch eine Feder (14) in Richtung auf den Anschlag (15) belastet ist.

6. Signalwandler nach einem der Ansprüche 4 oder 5, dadurch gekennzeichnet, daß die Platte (13) im Gehäuse abgedichtet geführt ist.

7. Signalwandler nach einem der Ansprüche 4 bis 6, dadurch gekennzeichnet, daß die Platte (13) mit mindestens einem Druckausgleichskanal (18) versehen ist, der von einer Plattenseite zur anderen geführt ist.

8. Signalwandler nach einem der Ansprüche 4 bis 7, dadurch gekennzeichnet, daß die Platte (13) mit einem sie durchsetzenden Verbindungskanal (22) versehen ist, der den Innenraum (6) des Hohlkörpers mit einem Anschlußkanal (2′) verbindet.

9. Signalwandler nach einem der Ansprüche 1 bis 8, dadurch gekennzeichnet, daß wenigstens zwei Hohlkörper (3,3′) unter Bildung eines zwischen ihnen liegenden Zwischenraumes (19) konzentrisch ineinander angeordnet sind, die am gleichen Ende am Gehäuse (1) verankert und am anderen Ende von derselben Abschlußwand (5) überdeckt sind.

10. Signalwandler nach Anspruch 9, dadurch gekennzeichnet, daß jeder Zwischenraum (19) zwischen zwei benachbarten konzentrischen Hohlkörpern (3,3′) mit einem eigenen Anschlußkanal (2) in Verbindung steht.

11. Signalwandler nach einem der Ansprüche 1 bis 10, dadurch gekennzeichnet, daß alle Hohlkörper (3,3′) gleich lang sind und aus Werkstoff mit dem gleichen Wärmedehnungskoeffizienten bestehen.

12. Signalwandler nach einem der Ansprüche 1 bis 11, dadurch gekennzeichnet, daß der Hohlkörper (3,3′) eine Wandung aus wenigstens zwei Materiallagen (25,26) hat, zwischen denen Elektroden (27,29) aufgebracht sind.

13. Signalwandler nach einem der Ansprüche 1 bis 12, dadurch gekennzeichnet, daß der Hohlkörper (3) aus einem spiralenförmig gewickelten Band (28) besteht, auf dessen beide Außenseiten die Elektroden (27,29) aufgebracht sind.

14. Signalwandler nach Anspruch 13, dadurch gekennzeichnet, daß das Band (28) aus zwei Lagen (25,26) aus piezoelektrischem Werkstoff besteht, zwischen denen eine Innenelektrode (27) und an deren Außenseiten je eine Außenelektrode (29) angeordnet ist.

15. Signalwandler nach einem der Ansprüche 1 bis 14, dadurch gekennzeichnet, daß auf das freie Ende des Hohlkörpers (3,3′) ein die Öffnung umgebender Sitzkörper (23,23′) dicht aufgesetzt ist, der mit der Abschlußwand (5) zusammenwirkt.

16. Signalwandler nach Anspruch 15, dadurch gekennzeichnet, daß der Sitzkörper (23,23′) auf seiner mit der Abschlußwand (5) zusammenwirkenden Seite mit einer scharfkantigen Schneide (24,24′) versehen ist.

17. Signalwandler nach einem der Ansprüche 1 bis 16, dadurch gekennzeichnet, daß der Hohlkörper (3,3′) aus Abschnitten (30,30′) zusammengesetzt ist, die in Längsrichtung aneinander anschließen.

18. Signalwandler nach einem der Ansprüche 1 bis 17, dadurch gekennzeichnet, daß der Hohlkörper (3,3′) tonnenförmig, gegen seine Enden konisch verjüngt ausgebildet ist.

19. Signalwandler nach einen der Ansprüche 1 und 3 bis 18, dadurch gekennzeichnet, daß jeder Hohlkörper (3,3′) einen polygonalen Querschnitt hat.

## Claims

1. A signal converter for the control of a pneumatic or hydraulic pressure medium flow by means of an electrical control signal, having a housing (1) in which are positioned at least one piezoelectric control element, which responds to an electrical signal, and at least one valve for the pressure medium, said valve being actuated by the control element, the housing also being provided with at least two connecting channels (2, 2′, 2˝) for the delivery and discharge of the pressure medium, characterised in that each control element consists of a hollow body (3, 3′) made of piezoelectric material and provided with electrodes, which hollow body is anchored at one end in the housing (1) and at the other, free end has an opening (4) covered by an end wall (5), and in that the interior (6) of the hollow body (3) is linked to a connecting channel (2′) and the space inside the housing (7) outside the hollow body (3) is linked to another connecting channel (2).

2. A signal converter as claimed in Claim 1, characterised in that each hollow body (3, 3′) is a cylindrical tube with a circular cross-section.

3. A signal converter as claimed in Claim 1 or Claim 2, characterised in that the electrodes are provided on the exterior wall and on the interior wall of the hollow body (3, 3′).

4. A signal converter as claimed in Claim 1, Claim 2 or Claim 3, characterised in that the end wall (5) is formed by a plate (13) which is movable in the housing (1) in the axial direction of the hollow body (3, 3′), and in that provided for the plate (13) is a stop (15) on which the plate (13) abuts in its end position facing the hollow body (3, 3′), said stop (15) being designed as a valve seat and the cavity (16) separated from the hollow body (3, 3′) by this valve seat being linked to a further connecting channel (2˝).

5. A signal converter as claimed in Claim 4, characterised in that the plate (13) is loaded by means of a spring (14) in the direction of the stop (15).

6. A signal converter as claimed in one of Claims 4 or 5, characterised in that the plate (13) is held sealed in the housing.

7. A signal converter as claimed in one of Claims 4 to 6, characterised in that the plate (13) is provided with at least one pressure-equalising channel (18) running from one side of the plate to the other.

8. A signal converter as claimed in one of Claims 4 to 7, characterised in that the plate (13) is provided with a linking channel (22) which penetrates it and links the interior (6) of the hollow body with a connecting channel (2′).

9. A signal converter as claimed in one of Claims 1 to 8, characterised in that at least two hollow bodies (3, 3′) are positioned concentrically in one another, forming a space (19) between them, are anchored to the housing (1) at the same end and are covered by the same end wall (5) at the other end.

10. A signal converter as claimed in Claim 9, characterised in that each space (19) between two adjacent concentric hollow bodies (3, 3′) is linked to its own connecting channel (2).

11. A signal converter as claimed in one of Claims 1 to 10, characterised in that all the hollow bodies (3, 3′) are of the same length and are made of material with the same coefficient of thermal expansion.

12. A signal converter as claimed in one of Claims 1 to 11, characterised in that the hollow body (3, 3′) has a wall consisting of at least two layers of material (25, 26), between which electrodes (27, 29) are applied.

13. A signal converter as claimed in one of Claims 1 to 12, characterised in that the hollow body (3) consists of a spirally wound tape (28) to whose two outsides the electrodes (27, 29) are applied.

14. A signal converter as claimed in Claim 13, characterised in that the tape (28) consists of two layers (25, 26) of piezoelectric material, one interior electrode (27) being positioned between the two layers and one exterior electrode (29) being positioned on each of their outsides.

15. A signal converter as claimed in one of Claims 1 to 14, characterised in that, tightly attached to the free end of the hollow body (3, 3′), is a seat body (23, 23′) which surrounds the opening and which cooperates with the end wall (5).

16. A signal converter as claimed in Claim 15, characterised in that the seat body (23, 23′) is provided with a sharp cutting edge (24, 24′) on the side which co-operates with the end wall (5).

17. A signal converter as claimed in one of Claims 1 to 16, characterised in that the hollow body (3, 3′) is fitted together out of sections (30, 30′) which join together in a longitudinal direction.

18. A signal converter as claimed in one of Claims 1 to 17, characterised in that the hollow body (3, 3′) is of a barrel-shaped design and is tapered towards its ends.

19. A signal converter as claimed in one of Claims 1 and 3 to 18, characterised in that each hollow body (3, 3′) has a polygonal cross-section.

## Revendications

1. Convertisseur de signal pour la commande d'un écoulement de fluide sous pression pneumatique ou hydraulique, par un signal de commande électrique, comportant un boîtier (1) dans lequel sont agencés au moins un organe de commande piézo-électrique qui répond à un signal électrique et au moins une vanne pour le fluide sous pression, actionnée par l'organe de commande, et qui est équipé d'au moins deux canaux de raccordement (2, 2′, 2˝) pour l'amenée et la sortie du fluide sous pression, caractérisé en ce que chaque organe de commande est composé d'un corps creux (3, 3′) en matériau piézo-électrique pourvu d'électrodes, ce corps creux étant ancré à une extrémité dans un boîtier (1) et présentant à l'autre extrémité libre une ouverture (4) qui est recouverte par une paroi de fermeture (5), et par le fait que la cavité intérieure (6) du corps creux est reliée à un canal de raccordement (2′) et la cavité (7) du boîtier à l'extérieur du corps (3) creux est reliée à un autre canal de raccordement (2).

2. Convertisseur de signal selon la revendication 1, caractérisé en ce que chaque corps creux (3, 3′) est un tube cylindrique à section circulaire.

3. Convertisseur de signal selon la revendication 1 ou 2, caractérisé en ce que les électrodes sont prévues sur l'enveloppe extérieure et sur l'enveloppe intérieure du corps creux (3, 3′).

4. Convertisseur de signal selon la revendication 1, 2 ou 3, caractérisé en ce que la paroi de fermeture (5) est formée par une plaque (13) qui est déplaçable dans le boîtier (1) en direction axiale du corps creux (3, 3′) et en ce qu'une butée (15) est prévue pour la plaque (13), la plaque (13) reposant sur celle-ci dans sa position finale tournée vers le corps creux (3, 3′), la butée (15) étant réalisée en tant que siège de vanne et la cavité (16) séparée du corps creux (3, 3′) par ce siège de vanne étant reliée à un autre canal de raccordement (2˝).

5. Convertisseur de signal selon la revendication 4, caractérisé en ce que la plaque (13) est sollicitée par un ressort (14) en direction de la butée (15).

6. Convertisseur de signal selon l'une ou l'autre des revendications 4 ou 5, caractérisé en ce que la plaque (13) est guidée de manière étanche dans le boîtier.

7. Convertisseur de signal selon l'une quelconque des revendications 4 à 6, caractérisé en ce que la plaque (13) est pourvue d'au moins d'un canal de compensation de pression (18) qui est mené d'un côté de la plaque à l'autre.

8. Convertisseur de signal selon l'une quelconque des revendications 4 à 7, caractérisé en ce que la plaque (13) est pourvue d'un canal de liaison (22) qui la traverse, qui relie la cavité intérieure (6) du corps creux à un canal de raccordement (2′).

9. Convertisseur de signal selon l'une quelconque des revendications 1 à 8, caractérisé en ce qu'au moins deux corps creux (3, 3′) sont agencés concentriquement l'un dans l'autre en formant un espace intermédiaire (19) entre eux, lesdits corps creux étant ancrés à la même extrémité sur le boîtier (1) et étant recouverts à l'autre extrémité par la même paroi de fermeture (5).

10. Convertisseur de signal selon la revendication 9, caractérisé en ce que chaque espace intermédiaire (19) entre deux corps creux (3, 3′) concentriques voisins est relié à un canal de raccordement (2) propre.

11. Convertisseur de signal selon l'une quelconque des revendications 1 à 10, caractérisé en ce que tous les corps creux (3, 3′) sont de même longueur et constitués par un matériau de même coefficient de dilatation thermique.

12. Convertisseur de signal selon l'une quelconque des revendications 1 à 11, caractérisé en ce que le corps creux (3, 3′) a une paroi constituée par au moins deux couches de matériau (25, 26) entre lesquelles sont posées des électrodes (27, 29).

13. Convertisseur de signal selon l'une quelconque des revendications 1 à 12, caractérisé en ce que le corps creux (3) est constitué par un ruban (28) enroulé en spirale, sur les deux faces extérieures duquel les électrodes (27, 29) sont posées.

14. Convertisseur de signal selon la revendication 13, caractérisé en ce que le ruban (28) est constitué par deux couches (25, 26) de matériau piézo-électrique entre lesquelles est agencée une électrode (27), et sur les faces extérieures desquelles est posée une électrode extérieure (29).

15. Convertisseur de signal selon l'une quelconque des revendications 1 à 14, caractérisé en ce qu'un siège (23, 23′) entourant l'ouverture est placé de manière étanche sur l'extrémité libre du corps creux (3, 3′), ledit siège coopérant avec la paroi de fermeture (5).

16. Convertisseur de signal selon la revendication 15, caractérisé en ce que le siège (23, 23′) est pourvu d'une lame à arête vive (24, 24′) sur sa face coopérant avec la paroi de fermeture (5).

17. Convertisseur de signal selon l'une quelconque des revendications 1 à 16, caractérisé en ce que le corps creux (3, 3′) est composé de tronçons (30, 30′) qui se raccordent en direction longitudinale.

18. Convertisseur de signal selon l'une quelconque des revendications 1 à 17, caractérisé en ce que le corps creux (3, 3′) est réalisé en forme de barillet se rétrécissant en cône vers ses extrémités.

19. Convertisseur de signal selon l'une quelconque des revendications 1 et 3 à 18, caractérisé en ce que chaque corps creux (3, 3′) a une section polygonale.
